# FASCICULE DE BREVET EUROPEEN

(11) **EP 4 059 334 B1**
(45) Date de publication et mention de la délivrance du brevet: **10.01.2024**
(21) Numéro de dépôt: 22162598.1
(22) Date de dépôt: 17.03.2022
(51) Int. Cl.: A01B 71/08, A01C 5/06

(54) **DISPOSITIF DE RACLAGE POUR DEUX DISQUES DE MACHINE AGRICOLE ET MACHINE AGRICOLE ASSOCIÉE**
ABSTREIFVORRICHTUNG FÜR ZWEI SCHEIBEN EINER LANDWIRTSCHAFTLICHE MASCHINE UND ENTSPRECHENDE LANDWIRTSCHAFTLICHE MASCHINE
SCRAPER DEVICE FOR TWO DISCS OF AN AGRICULTURAL MACHINE AND ASSOCIATED AGRICULTURAL MACHINE

(30) Priorité: 18.03.2021 FR 2102729
(43) Date de publication de la demande: 21.09.2022
(73) Titulaire: Kuhn SAS, 67700 Saverne (FR)
(72) Inventeur: ANDRES, Christophe, 67700 WALDOLWISHEIM (FR)
(74) Mandataire: Esch, Esther Evelyne

(56) Documents cités:
- US-A- 718 825
- US-A- 1 545 895
- US-A1- 2020 267 882
- US-A1- 2020 315 080
- US-S1- D 892 177

## Description

La présente invention concerne le domaine des dispositifs de raclage pour disque de machine agricole et le domaine des machines agricoles.

Les machines agricoles, de type semoirs agricoles, sont généralement munies de disques pour ouvrir le sol et former au moins un sillon dans lequel une ou plusieurs graines pourront ultérieurement être déposées. Ces disques fonctionnent généralement par paires sur chacune des lignes ou rangs de semis et sont orientés en V pour ouvrir le sol, on parle souvent de disques ouvreurs.

Ces disques sont usuellement utilisés dans les deux grandes catégories de semoirs, à savoir les semoirs à céréales, telles que par exemple le blé, l'orge, le colza, etc., aussi appelés semoirs en ligne, et les semoirs monograine, par exemple pour le maïs, la betterave, etc., aussi appelés semoirs de précision ou semoirs en rangs.

Ces disques devant travailler dans des sols de différentes natures par exemple crayeux, argileux, etc. et dans différentes conditions selon la quantité de débris, l'humidité, la vitesse de semis, etc., il est courant qu'ils accumulent de la terre. En effet, la terre vient se coller sur les disques, ce qui empêche leur bon fonctionnement. Il en résulte notamment les inconvénients suivants : la rotation des disques peut être bloquée et/ou des amas de terre empêchent une bonne pénétration du sol, etc.

Un mauvais fonctionnement des disques ouvreurs implique une mauvaise implantation de la graine. La graine n'est pas plantée à la bonne profondeur ou est plantée dans un sillon mal ouvert. Ces inconvénients engendrent une détérioration de la qualité du semis et donc de la récolte qui s'en suit, puisque toutes les graines semées ne lèveront pas ou pas de manière optimale.

On connaît, pour pallier ces inconvénients, des éléments racleurs qui servent à maintenir les disques propres et à éviter les accumulations de terre et les bouchages. Ces éléments racleurs sont couramment appelés décrotteurs ou racleurs.

De tels éléments racleurs peuvent être montés seulement à l'extérieur ou seulement à l'intérieur des disques avec un élément racleur par disque. De manière alternative, de tels éléments racleurs peuvent être montés à l'intérieur et à l'extérieur pour une meilleure efficacité avec deux éléments racleurs par disque.

Certains éléments racleurs sont fabriqués d'un seul tenant et doivent être remplacés intégralement, comme une pièce d'usure, d'autres disposent de parties amovibles, celles en contact avec le disque, pour un remplacement plus facile et plus économique. Ces pièces d'usure peuvent être en caoutchouc ou métal.

L'élément racleur doit donc être en contact avec le disque pour être efficace mais ne pas trop appuyer contre celui-ci pour éviter un frottement trop important et une usure prématurée.

Du fait de ce contact permanent, l'usure de l'élément racleur fait qu'il peut perdre en efficacité au fil du temps si le contact avec le disque n'est plus garanti.

Le réglage d'un élément racleur peut se faire en jouant sur la pression par exemple via un ressort ou via la position de l'élément racleur par exemple avec des platines de fixation à trous. Les éléments racleurs sont rarement réglés en dehors de leur remplacement car cette opération est fastidieuse pour l'agriculteur vu leur nombre. L'objectif est d'avoir un réglage uniforme sur tous les disques en toutes conditions et simple à mettre en place. La pratique est ainsi de conserver ce réglage jusqu'à ce que l'on remarque que les éléments racleurs fonctionnent moins bien, par exemple car l'agriculteur constate visuellement un travail de moins bonne qualité, et nécessitent d'être changés.

La publication US2020/0267882A1 décrit un ensemble racleur qui comprend un premier élément racleur externe venant en appui de la surface externe d'un premier disque, un premier élément racleur interne venant en appui de la surface interne du premier disque, un deuxième élément racleur externe venant en appui de la surface externe d'un deuxième disque, un deuxième élément racleur interne venant en appui de la surface interne du deuxième disque. L'ensemble racleur comprend en outre un ressort qui comprend une première extrémité reliée au premier élément racleur externe pour presser le premier racleur externe contre le premier disque et une deuxième extrémité reliée à un deuxième élément racleur externe. Ce ressort permet de presser le premier élément racleur externe pour presser le deuxième racleur externe contre le deuxième disque. L'ensemble racleur comprend en outre un premier ressort conique pour presser le premier racleur interne contre le premier disque et un deuxième ressort conique pour presser le deuxième racleur interne contre le deuxième disque. Toutefois, cet ensemble racleur présente le désavantage d'être complexe à régler, puisqu'il est nécessaire de jouer sur la pression d'au moins trois ressorts.

Les publications US 718 825 A, US 2020/315080 A1, US D 892 177 S1 et US 1 545 895 A décrivent aussi des dispositifs de raclage connus.

La présente invention a pour but de pallier au moins l'un de ces inconvénients et vise à proposer une solution permettant de faciliter le réglage des éléments racleurs.

A cet effet, la présente invention concerne un dispositif de raclage pour au moins un disque de machine agricole comprenant au moins :

un premier ensemble pour un premier disque comprenant une surface externe et une surface interne, le premier ensemble comprenant au moins :

un premier élément racleur externe comprenant au moins une première portion de raclage apte et destinée à venir en appui contre au moins une partie de la surface externe du premier disque et une première portion de couplage apte et destinée à être couplée mécaniquement au moins à un châssis de la machine agricole par des premiers moyens de couplage, le premier élément racleur externe étant apte et destiné à être monté pivotant par rapport au châssis autour d'un premier axe de rotation A1 par les premiers moyens de couplage,

un premier élément racleur interne comprenant au moins une deuxième portion de raclage apte et destinée à venir en appui contre au moins une partie de la surface interne du premier disque et une deuxième portion de couplage apte et destinée à être couplée à la première portion de couplage du premier élément racleur externe par des deuxièmes moyens de couplage,

le premier élément racleur interne étant monté pivotant par rapport au premier élément racleur externe autour d'un second axe de rotation A2 par les deuxième moyens de couplage,

un deuxième ensemble pour un deuxième disque comprenant une surface externe et une surface interne, le deuxième ensemble comprenant au moins :
un deuxième élément racleur externe comprenant au moins une troisième portion de raclage apte et destinée à venir en appui contre au moins une partie de la surface externe du deuxième disque et une troisième portion de couplage apte et destinée à être couplée mécaniquement au moins audit châssis de la machine agricole par des troisièmes moyens de couplage, le premier élément racleur externe étant apte et destiné à être monté pivotant par rapport au châssis autour d'un troisième axe de rotation A3 par les troisièmes moyens de couplage,
un deuxième élément racleur interne comprenant au moins une quatrième portion de raclage apte et destinée à venir en appui contre au moins une partie de la surface interne du deuxième disque et une quatrième portion de couplage apte et destinée à être couplée à la troisième portion de couplage du premier élément racleur externe par des quatrièmes moyens de couplage,
le deuxième élément racleur interne étant monté pivotant par rapport au deuxième élément racleur externe autour d'un quatrième axe de rotation A4 par les quatrièmes moyens de couplage,
le dispositif de raclage comprend en outre un moyen de rappel relié par une première extrémité à la deuxième portion de couplage et par une deuxième extrémité à la quatrième portion de couplage,
le dispositif de raclage est caractérisé
en ce que le moyen de rappel est configuré pour entraîner un mouvement de rotation du premier élément racleur interne selon le second axe de rotation A2, de sorte à presser la deuxième portion de raclage contre la surface interne du premier disque et de sorte à entraîner un mouvement de rotation du premier élément racleur externe selon le premier axe de rotation A1 pour presser la première portion de raclage contre la surface externe du premier disque,
en ce que le moyen de rappel est configuré pour entraîner un mouvement de rotation du deuxième élément racleur interne selon le quatrième axe de rotation A4, de sorte à presser la quatrième portion de raclage contre la surface interne du deuxième disque et de sorte à entraîner un mouvement de rotation du deuxième élément racleur externe selon le troisième axe de rotation A3 pour presser la troisième portion de raclage contre la surface externe du deuxième disque.

L'invention concerne également une machine agricole comprenant au moins :
- un premier disque,
- un châssis,
- au moins un dispositif de raclage,
ladite machine agricole est caractérisée en ce que ledit dispositif de raclage est selon l'invention.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective d'un dispositif de raclage selon une deuxième variante de l'invention couplé au châssis d'une machine agricole selon l'invention,
[Fig. 2] la figure 2 représente une vue de face du dispositif de raclage illustré à la figure 1,
[Fig. 3] la figure 3 représente une vue en perspective d'un dispositif de raclage selon la deuxième variante de l'invention associé à un premier disque et à un deuxième disque,
[Fig. 4] la figure 4 représente une vue de face du dispositif de raclage illustré à la figure 3,
[Fig. 5] la figure 5 représente une vue en perspective d'un dispositif de raclage selon la deuxième variante de l'invention pour un premier disque et un deuxième disque,
[Fig. 6] la figure 6 représente une vue en perspective d'un premier ensemble racleur du dispositif de raclage selon l'invention,
[Fig. 7] la figure 7 représente une vue en perspective d'un premier ensemble racleur du dispositif de raclage selon l'invention,
[Fig. 8] la figure 8 représente une vue en perspective d'un premier ensemble racleur du dispositif de raclage selon une alternative selon l'invention.

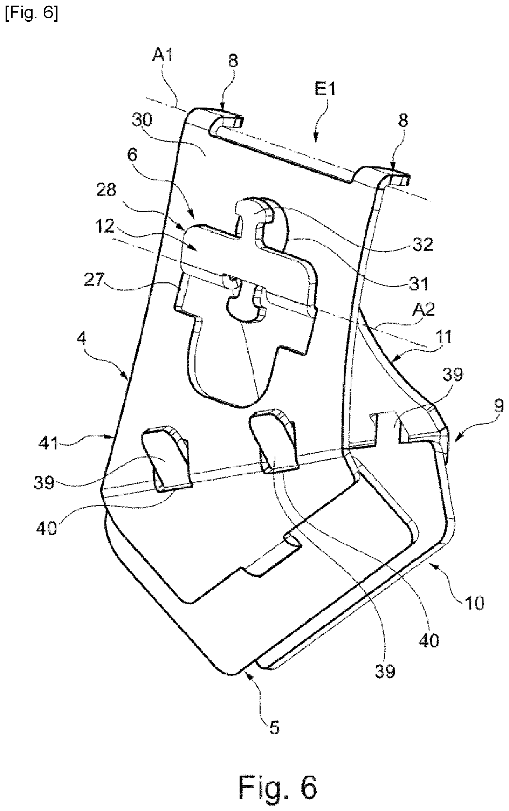

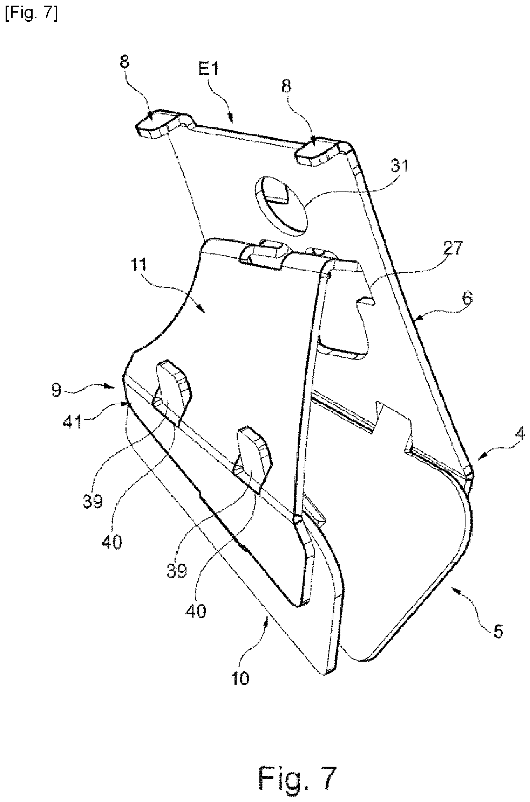

Un dispositif de raclage pour au moins un disque de machine agricole comprend au moins :
un premier ensemble E1 pour un premier disque 1 comprenant une surface externe 2 et une surface interne 3, le premier ensemble E1 comprenant au moins (figures 6 à 8) :
un premier élément racleur externe 4 comprenant au moins une première portion de raclage 5 apte et destinée à venir en appui contre au moins une partie de la surface externe 2 du premier disque 1 et une première portion de couplage 6 apte et destinée à être couplée mécaniquement au moins à un châssis 7 de la machine agricole par des premiers moyens de couplage 8, le premier élément racleur externe 4 étant apte et destiné à être monté pivotant par rapport au châssis 7 autour d'un premier axe de rotation A1 par les premiers moyens de couplage 8,
un premier élément racleur interne 9 comprenant au moins une deuxième portion de raclage 10 apte et destinée à venir en appui contre au moins une partie de la surface interne 3 du premier disque 1 et une deuxième portion de couplage 11 apte et destinée à être couplée à la première portion de couplage 6 du premier élément racleur externe 4 par des deuxièmes moyens de couplage 12,
le premier élément racleur interne 9 étant monté pivotant par rapport au premier élément racleur externe 4 autour d'un second axe de rotation A2 par les deuxièmes moyens de couplage 12.

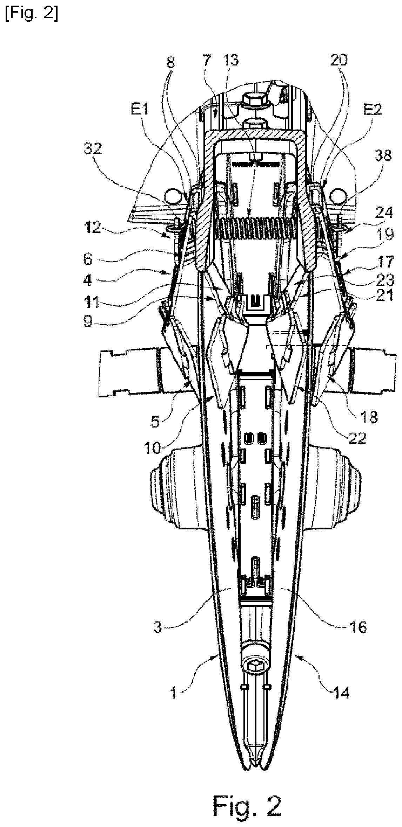

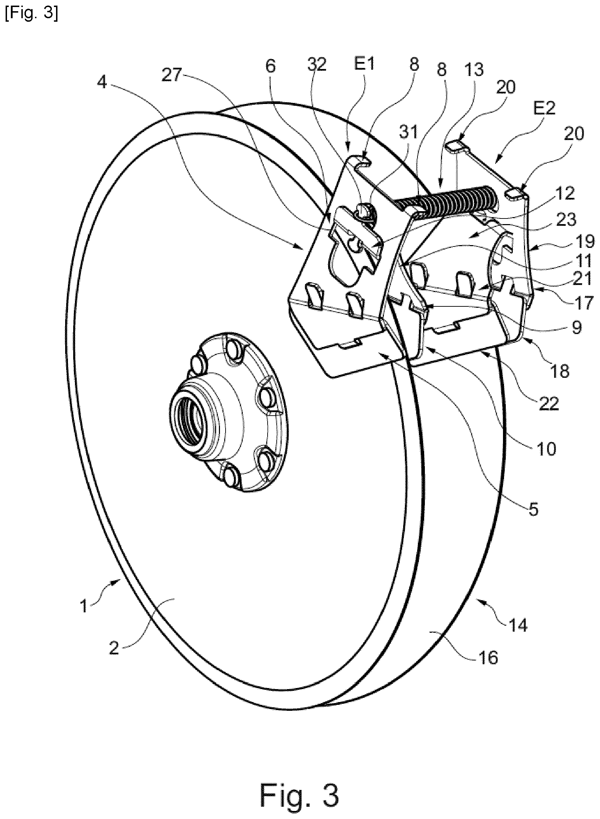

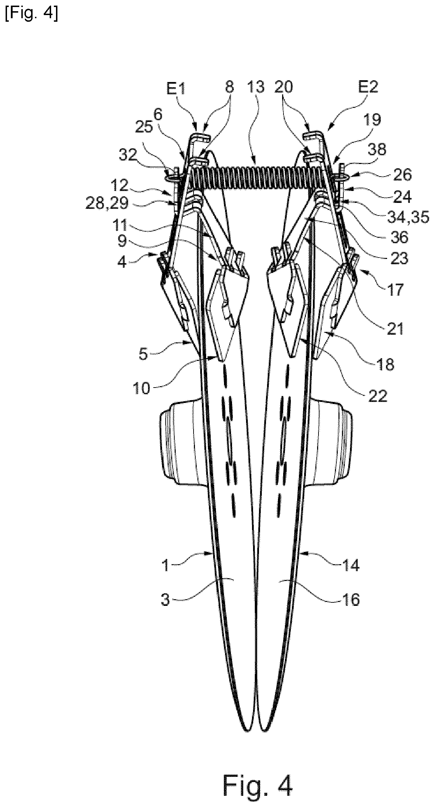

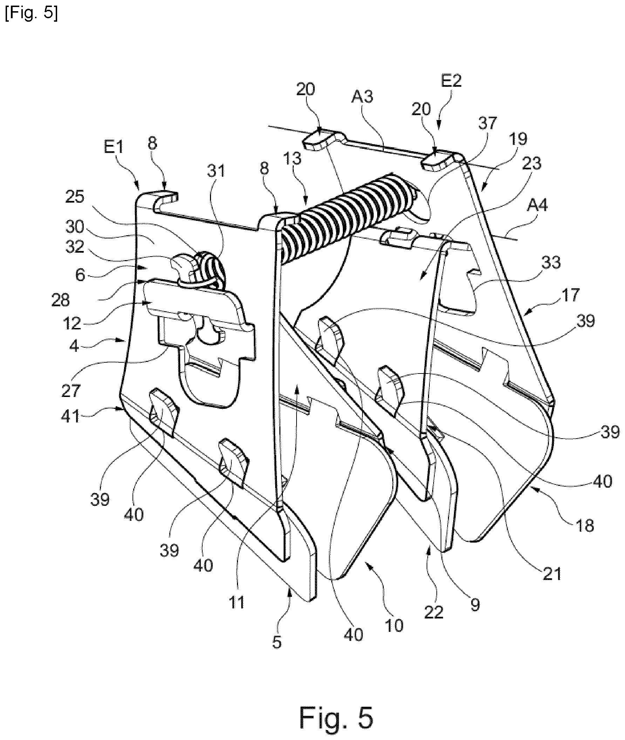

Conformément à l'invention et comme l'illustrent les figures 2 à 5, le dispositif de raclage comprend entre autre :
un moyen de rappel 13 relié au moins à la deuxième portion de couplage 11,
en ce que le moyen de rappel 13 est configuré pour entraîner un mouvement de rotation du premier élément racleur interne 9 selon le second axe de rotation A2, de sorte à presser la deuxième portion de raclage 10 contre la surface interne 3 du premier disque 1 et de sorte à entraîner un mouvement de rotation du premier élément racleur externe 4 selon le premier axe de rotation A1 pour presser la première portion de raclage 5 contre la surface externe 2 du premier disque 1.

Avantageusement, au moins le premier élément racleur externe 4 et le premier élément racleur interne 9 sont reliés par l'intermédiaire du moyen de rappel 13 et des deuxièmes moyens de couplage 12, de sorte à centraliser le réglage au moins du premier élément racleur externe 4 et du premier élément racleur interne 9 pour pouvoir obtenir une pression exercée respectivement sur la surface externe 2 et la surface interne 3 du premier disque 1 qui soit identique. En effet, le moyen de rappel 13 permet à la fois de régler la pression de la deuxième portion de raclage 10 contre la surface interne 3 du premier disque 1 et de régler la pression de la première portion de raclage 5 contre la surface externe 2 du premier disque 1. La pression exercée respectivement sur la surface externe 2 et la surface interne 3 du premier disque 1 peut ainsi être identique. Cette conception présente les avantages de faciliter le réglage du dispositif de raclage et de limiter le nombre de composants permettant le réglage de la pression de la première portion de raclage 5 et de la deuxième portion de raclage 10 sur le premier disque 1. La première portion de raclage 5 et la deuxième portion de raclage 10 sont des pièces d'usures du fait des frottements sur le premier disque 1. Le moyen de rappel 13 permet de rattraper l'usure de la première portion de raclage 5 et de la deuxième portion de raclage 10 et de maintenir le contact avec le premier disque 1 sans nécessité d'intervention humaine. Enfin, cette configuration permet de faciliter le montage et le démontage du dispositif de raclage sur la machine agricole. Le réglage du moyen de rappel 13 est facile et rapide.

Selon une première variante de réalisation non représentée ni revendiquée, le moyen de rappel 13 est relié par une première extrémité 25 à la deuxième portion de couplage 11 et par une deuxième extrémité 26 au châssis 7 de la machine agricole.

Avantageusement, le premier élément racleur externe 4 et le premier élément racleur interne 9 sont reliés entre eux par l'intermédiaire du moyen de rappel 13 et des deuxièmes moyens de couplage 12, de sorte à centraliser le réglage du premier élément racleur externe 4 et du premier élément racleur interne 9 pour pouvoir obtenir une pression exercée respectivement sur la surface externe 2 et la surface interne 3 du premier disque 1 qui soit identique. Cette conception est particulièrement avantageuse pour une machine agricole comprenant au moins un dispositif de raclage selon la première variante de réalisation pour un seul disque à savoir le premier disque 1.

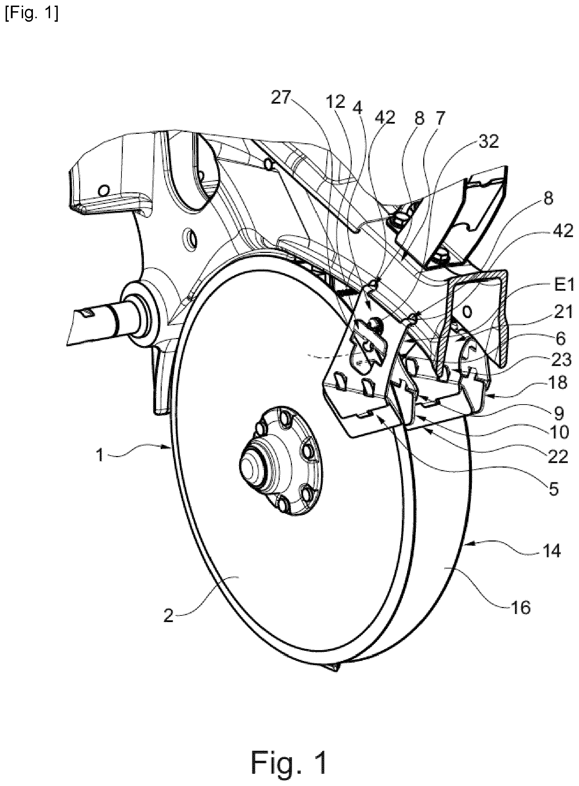

Selon l'invention représentée aux figures 1 à 5, le dispositif de raclage selon l'invention, comprend entre autre un deuxième ensemble E2 pour un deuxième disque 14 comprenant une surface externe 15 et une surface interne 16.

Le deuxième ensemble E2 comprend au moins :
- un deuxième élément racleur externe 17 comprenant au moins une troisième portion de raclage 18 apte et destinée à venir en appui contre au moins une partie de la surface externe 15 du deuxième disque 14 et une troisième portion de couplage 19 apte et destinée à être couplée mécaniquement au moins audit châssis 7 de la machine agricole par des troisièmes moyens de couplage 20, le premier élément racleur externe 17 étant apte et destiné à être monté pivotant par rapport au châssis 7 autour d'un troisième axe de rotation A3 par les troisièmes moyens de couplage 20,
- un deuxième élément racleur interne 21 comprenant au moins une quatrième portion de raclage 22 apte et destinée à venir en appui contre au moins une partie de la surface interne 16 du deuxième disque 14 et une quatrième portion de couplage 23 apte et destinée à être couplée à la troisième portion de couplage 19 du premier élément racleur externe 17 par des quatrièmes moyens de couplage 24,
le deuxième élément racleur interne 21 étant monté pivotant par rapport au deuxième élément racleur externe 17 autour d'un quatrième axe de rotation A4 par les quatrièmes moyens de couplage 24.

Conformément à ce deuxième ensemble E2 de l'invention, le moyen de rappel 13 est relié par une première extrémité 25 à la deuxième portion de couplage 11 et par une deuxième extrémité 26 à la quatrième portion de couplage 23, et le moyen de rappel 13 est configuré pour entraîner un mouvement de rotation du deuxième élément racleur interne 21 selon le quatrième axe de rotation A4, de sorte à presser la quatrième portion de raclage 22 contre la surface interne 16 du deuxième disque 14 et de sorte à entraîner un mouvement de rotation du deuxième élément racleur externe 17 selon le troisième axe de rotation A3 pour presser la troisième portion de raclage 18 contre la surface externe 15 du deuxième disque 14.

Avantageusement, le premier élément racleur externe 4 et le premier élément racleur interne 9, ainsi que le deuxième élément racleur externe 17 et le deuxième élément racleur interne 21 sont reliés entre eux par l'intermédiaire du moyen de rappel 13, des deuxièmes moyens de couplage 12 et des quatrièmes moyens de couplage 24, de sorte à centraliser le réglage du premier élément racleur externe 4 et du premier élément racleur interne 9 et aussi du deuxième élément racleur externe 17 et du deuxième élément racleur interne 21 pour pouvoir obtenir une pression exercée respectivement sur la surface externe 2 et la surface interne 3 du premier disque 1 et une pression exercée sur la surface externe 15 et la surface interne 16 du deuxième disque 14 qui soient identiques. En effet, le moyen de rappel 13 permet de régler la pression de la deuxième portion de raclage 10 contre la surface interne 3 du premier disque 1, de régler la pression de la première portion de raclage 5 contre la surface externe 2 du premier disque 1, de régler la pression de la troisième portion de raclage 18 contre la surface externe 15 du deuxième disque 14 et de régler la pression sur la quatrième portion de raclage 22 contre la surface interne 16 du deuxième disque 14. Cette conception présente les avantages de faciliter le réglage du dispositif de raclage et de limiter le nombre de composants permettant le réglage de la pression de la première portion de raclage 5 et de la deuxième portion de raclage 10 sur le premier disque 1 et de la pression de la troisième portion de raclage 18 et de la quatrième portion de raclage 22 sur le deuxième disque 14. La première portion de raclage 5, la deuxième portion de raclage 10, la troisième portion de raclage 18, et la quatrième portion de raclage 22 sont des pièces d'usures du fait des frottements respectivement sur le premier disque 1 et le deuxième disque 14. Le moyen de rappel 13 permet de rattraper l'usure de la première portion de raclage 5, de la deuxième portion de raclage 10, de la troisième portion de raclage 18, et de la quatrième portion de raclage 22 et de maintenir le contact avec le premier disque 1 ou le deuxième disque 14 sans nécessité d'intervention humaine. Cette conception est particulièrement avantageuse pour une machine agricole comprenant au moins un dispositif de raclage selon l'invention pour une paire de disques, à savoir un premier disque et un deuxième disque.

De préférence, le moyen de rappel 13 consiste en un unique ressort de raideur prédéterminée.

Avantageusement, pour régler le dispositif de raclage pour un premier disque 1 ou pour un premier disque 1 et un deuxième disque 2, seul un ressort doit être manipulé.

Dans la première variante de réalisation, le ressort tire le premier élément racleur interne 9 qui appuie sur la surface interne 3 du premier disque 1 via les deuxièmes moyens de couplage 12, de préférence une liaison pivot. Puis, le mouvement du premier élément racleur interne 9 entraîne le mouvement de rotation du premier élément racleur externe 4 qui appuie sur la surface externe 2 du premier disque 1.

Dans l'invention, d'une part, le ressort tire le premier élément racleur interne 9 qui appuie sur la surface interne 3 du premier disque 1 via les deuxièmes moyens de couplage 12, de préférence une liaison pivot et d'autre part, le ressort tire le deuxième élément racleur interne 21 qui appuie sur la surface interne 16 du deuxième disque 14 via les quatrièmes moyens de couplage 24, de préférence une liaison pivot. Puis, d'une part, le mouvement du premier élément racleur interne 9 entraîne le mouvement de rotation du premier élément racleur externe 4 qui appuie sur la surface externe 2 du premier disque 1, et d'autre part, le mouvement du deuxième élément racleur interne 21 entraîne le mouvement de rotation du deuxième élément racleur externe 17 qui appuie sur la surface externe 15 du deuxième disque 14.

De préférence, la raideur du ressort est choisie de sorte à presser la première portion de raclage 5 contre la surface externe 2 du premier disque 1 et de sorte à presser la deuxième portion de raclage 10 contre la surface interne 3 du premier disque 1. De préférence, le ressort du moyen de rappel 13 dispose d'une raideur pressant de manière permanente la première portion de raclage 5 contre la surface externe 2 du premier disque 1 et la deuxième portion de raclage 10 contre la surface interne 3 du premier disque 1.

Il est possible de prévoir un jeu de plusieurs ressorts ayant différentes raideurs pour adapter le dispositif de raclage à des conditions spécifiques de travail ou à des sols particuliers.

Le ressort préférentiellement de traction peut être remplacé par un autre composant équivalent en termes de fonction.

De préférence, la première portion de raclage 5 est montée amovible relativement à la première portion de couplage 6 et/ou la deuxième portion de raclage 10 est montée amovible relativement à la deuxième portion de couplage 11 (figures 1 à 7).

Avantageusement, la première portion de raclage 5 et/ou la deuxième portion de raclage 10 peut être remplacée en cas d'usure.

Par exemple, la première portion de raclage 5/ la deuxième portion de raclage 10 peut comprendre deux languettes 39 espacées l'une de l'autre s'engageant dans deux orifices 40 espacés l'un de l'autre que comprend la deuxième extrémité 41 de la première portion de couplage 6/ la deuxième portion de couplage 11.

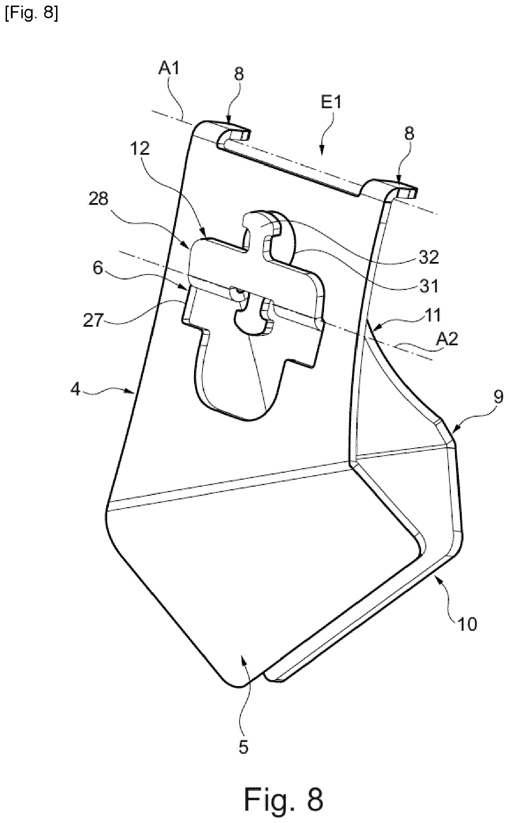

De préférence et manière alternative, la première portion de raclage 5 et la première portion de couplage 6 constituent une pièce d'un tenant et/ou la deuxième portion de raclage 10 et la deuxième portion de couplage 11 constituent une pièce d'un tenant (figure 8).

La première portion de raclage 5 et/ou la deuxième portion de raclage 10 peut être préférentiellement en caoutchouc ou métal.

De préférence, la première portion de couplage 6 comprend une première ouverture 27 et la deuxième portion de couplage 11 comprend une première extrémité 28 traversant ladite première ouverture 27 et comprenant une première zone d'appui 29 agencée pour venir en appui contre une face externe 30 de la première portion de couplage 6 lors du mouvement de rotation du premier élément racleur interne 9 selon le second axe de rotation A2.

Avantageusement, lors du mouvement de rotation du premier élément racleur interne 9 selon le second axe de rotation A2, la zone d'appui 29 du premier élément racleur interne 9 vient appuyer sur la face externe 30 de la première portion de couplage 6 du premier élément racleur externe 4. Il en résulte que le premier élément racleur externe 4 est à son tour entraîné en rotation selon le premier axe de rotation A1 par l'intermédiaire des premiers moyens de couplage 8, par exemple une liaison pivot, pour presser la première portion de raclage 5 contre la surface externe 2 du premier disque 1.

De préférence, la première portion de couplage 6 comprend une deuxième ouverture 31, la deuxième portion de couplage 11 comprend des premiers moyens de fixation 32 du moyen de rappel 13 disposés en regard de la deuxième ouverture 31 et le moyen de rappel 13 traverse ladite deuxième ouverture 30 et est fixé par sa première extrémité 25 aux premiers moyens de fixation 32.

Ces premiers moyens de fixation 32 peuvent consister en une patte ou une languette.

Dans la deuxième variante de réalisation selon l'invention, de préférence, la raideur du ressort est choisie de sorte à presser la première portion de raclage 5 contre la surface externe 2 du premier disque 1, de sorte à presser la deuxième portion de raclage 10 contre la surface interne 3 du premier disque 1, de sorte à presser la troisième portion de raclage 18 contre la surface externe 15 du deuxième disque 14, et de sorte à presser la quatrième portion de raclage 22 contre la surface interne 16 du deuxième disque 14. De préférence, le ressort du moyen de rappel 13 dispose d'une raideur pressant de manière permanente la première portion de raclage 5 contre la surface externe 2 du premier disque 1, la deuxième portion de raclage 10 contre la surface interne 3 du premier disque 1, la troisième portion de raclage 18 contre la surface externe 15 du deuxième disque 14, et la quatrième portion de raclage 22 contre la surface interne 16 du deuxième disque 14.

Dans la deuxième variante de réalisation selon l'invention, de préférence, la troisième portion de raclage 18 est montée amovible relativement à la troisième portion de couplage 19 et/ou la quatrième portion de raclage 22 est montée amovible relativement à la quatrième portion de couplage 21.

Avantageusement, la troisième portion de raclage 18 et/ou la quatrième portion de raclage 22 peut être remplacée en cas d'usure.

Par exemple, la troisième portion de raclage 18 / la quatrième portion de raclage 22 peut comprendre deux languettes 39 espacées l'une de l'autre s'engageant dans deux orifices 40 espacés l'un de l'autre que comprend la deuxième extrémité 41 de la troisième portion de couplage 19 / la quatrième de couplage 23.

De préférence et manière alternative, la troisième portion de raclage 18 et la troisième portion de couplage 19 constituent une pièce d'un tenant et/ou la quatrième portion de raclage 22 et la quatrième portion de couplage 21 constituent une pièce d'un tenant.

Dans la deuxième variante de réalisation selon l'invention, de préférence, la troisième portion de couplage 19 comprend une troisième ouverture 33 et la quatrième portion de couplage 21 comprend une première extrémité 34 traversant ladite troisième ouverture 33 et comprenant une deuxième zone d'appui 35 agencée pour venir en appui contre une face externe 36 de la troisième portion de couplage 19 lors du mouvement de rotation du deuxième élément racleur interne 17 selon le quatrième axe de rotation A4.

Avantageusement, lors du mouvement de rotation du deuxième élément racleur interne 21 selon le quatrième axe de rotation A4, la zone d'appui 35 du deuxième élément racleur interne 21 vient appuyer sur la face externe 36 de la troisième portion de couplage 19 du deuxième élément racleur externe 17. Il en résulte que le deuxième élément racleur externe 17 est à son tour entraîné en rotation selon le troisième axe de rotation A3 par l'intermédiaire des troisièmes moyens de couplage 20, par exemple une liaison pivot, pour presser la troisième portion de raclage 18 contre la surface externe 15 du deuxième disque 14.

Dans la deuxième variante de réalisation selon l'invention, de préférence, la troisième portion de couplage 19 comprend une quatrième ouverture 37, la quatrième portion de couplage 21 comprend des deuxièmes moyens de fixation 38 du moyen de rappel 13 disposés en regard de la quatrième ouverture 37 et le moyen de rappel 13 traverse ladite quatrième ouverture 37 et est fixé par sa deuxième extrémité 26 aux deuxièmes moyens de fixation 38.

Ces deuxièmes moyens de fixation 38 peuvent consister en une patte ou une languette.

De préférence et comme l'illustre la figure 1, les premiers/troisièmes moyens de couplage 8, 20 peuvent comprendre deux pattes supérieures qui viennent se loger dans deux trous 42 prévus dans le châssis 7 de la machine agricole. Le moyen de rappel 13, préférentiellement un ressort, permet de plaquer les pattes contre le bord de ces trous 42 pour qu'elles restent en place. Pour démonter les pattes des trous 42 du châssis 7, il suffit d'enlever le moyen de rappel 13 et le premier/deuxième élément racleur externe 4, 17 sont libres vis-à-vis du châssis 7. D'autres solutions techniques qui auraient la même fonction pivot peuvent être envisagées comme par exemple un trou taraudé et une vis partiellement vissée qui passe à travers le premier/deuxième élément racleur externe 4, 17 pour offrir un jeu et donc un pivotement.

L'invention concerne également une machine agricole comprenant au moins :
- un premier disque 1,
- un châssis 7,
- au moins un dispositif de raclage selon l'invention.

Conformément à l'invention, ladite machine agricole est caractérisée en ce que ledit dispositif de raclage est selon l'invention et tel que décrit précédemment.

De préférence, le premier disque 1 est disposé entre le premier élément racleur externe 4 et le premier élément racleur interne 9.

L'invention concerne également une machine agricole comprenant au moins :
un premier disque 1 et un deuxième disque 14 disposé en regard l'un de l'autre,
un châssis 7,
au moins un dispositif de raclage pour le premier disque 1 et le deuxième disque 14,
ladite machine agricole est caractérisée en ce que ledit dispositif de raclage est selon l'invention décrite précédemment

De préférence, le premier disque 1 est disposé entre le premier élément racleur externe 4 et le premier élément racleur interne 9 et le deuxième disque 14 est disposé entre le deuxième élément racleur externe 17 et le deuxième élément racleur interne 21 (figures 1 à 4).

Avantageusement, dans ce cas la machine agricole comprend au moins une paire de disques à savoir le premier disque 1 et le deuxième disque 2 et à cette paire est associé un dispositif de raclage selon l'invention.

De préférence, le premier disque 1 et le deuxième disque 14 sont orientés en V pour ouvrir le sol.

La machine agricole permet de travailler le sol avec un ou plusieurs disques montés seules ou par paire.

De préférence, la machine agricole est un semoir agricole.

Il peut s'agir d'un semoir à céréales, telles que par exemple le blé, l'orge, le colza, etc., aussi appelés semoir en ligne.

Il peut s'agir d'un semoir monograine par exemple pour le maïs, la betterave, etc., aussi appelés semoirs de précision ou semoirs en rangs.

Bien entendu, l'invention n'est pas limitée aux modes de réalisations décrits et représentés aux dessins annexés. Des modifications des modes de réalisations restent possibles, notamment du point de vue de la constitution des divers éléments optionnels ou par substitution d'équivalents techniques, sans sortir pour autant du domaine de protection de l'invention.

## Revendications

1. Dispositif de raclage pour au moins un disque de machine agricole comprenant au moins :
un premier ensemble (E1) pour un premier disque (1) comprenant une surface externe (2) et une surface interne (3), le premier ensemble (E1) comprenant au moins :
- un premier élément racleur externe (4) comprenant au moins une première portion de raclage (5) apte et destinée à venir en appui contre au moins une partie de la surface externe (2) du premier disque (1) et une première portion de couplage (6) apte et destinée à être couplée mécaniquement au moins à un châssis (7) de la machine agricole par des premiers moyens de couplage (8), le premier élément racleur externe (4) étant apte et destiné à être monté pivotant par rapport au châssis (7) autour d'un premier axe de rotation (A1) par les premiers moyens de couplage (8),
- un premier élément racleur interne (9) comprenant au moins une deuxième portion de raclage (10) apte et destinée à venir en appui contre au moins une partie de la surface interne (3) du premier disque (1) et une deuxième portion de couplage (11) apte et destinée à être couplée à la première portion de couplage (6) du premier élément racleur externe (4) par des deuxièmes moyens de couplage (12),
le premier élément racleur interne (9) étant monté pivotant par rapport au premier élément racleur externe (4) autour d'un second axe de rotation (A2) par les deuxièmes moyens de couplage (12),
un deuxième ensemble (E2) pour un deuxième disque (14) comprenant une surface externe (15) et une surface interne (16), le deuxième ensemble (E2) comprenant au moins :
- un deuxième élément racleur externe (17) comprenant au moins une troisième portion de raclage (18) apte et destinée à venir en appui contre au moins une partie de la surface externe (15) du deuxième disque (14) et une troisième portion de couplage (19) apte et destinée à être couplée mécaniquement au moins audit châssis (7) de la machine agricole par des troisièmes moyens de couplage (20), le premier élément racleur externe (17) étant apte et destiné à être monté pivotant par rapport au châssis (7) autour d'un troisième axe de rotation (A3) par les troisièmes moyens de couplage (20),
- un deuxième élément racleur interne (21) comprenant au moins une quatrième portion de raclage (22) apte et destinée à venir en appui contre au moins une partie de la surface interne (16) du deuxième disque (14) et une quatrième portion de couplage (23) apte et destinée à être couplée à la troisième portion de couplage (19) du premier élément racleur externe (17) par des quatrièmes moyens de couplage (24),
le deuxième élément racleur interne (21) étant monté pivotant par rapport au deuxième élément racleur externe (17) autour d'un quatrième axe de rotation (A4) par les quatrièmes moyens de couplage (24),
un moyen de rappel (13) relié par une première extrémité (25) à la deuxième portion de couplage (11) et par une deuxième extrémité (26) à la quatrième portion de couplage (23),
le dispositif de raclage est **caractérisé**
**en ce que** le moyen de rappel (13) est configuré pour entraîner un mouvement de rotation du premier élément racleur interne (9) selon le second axe de rotation (A2), de sorte à presser la deuxième portion de raclage (10) contre la surface interne (3) du premier disque (1) et de sorte à entraîner un mouvement de rotation du premier élément racleur externe (4) selon le premier axe de rotation (A1) pour presser la première portion de raclage (5) contre la surface externe (2) du premier disque (1),
**en ce que** le moyen de rappel (13) est configuré pour entraîner un mouvement de rotation du deuxième élément racleur interne (21) selon le quatrième axe de rotation (A4), de sorte à presser la quatrième portion de raclage (22) contre la surface interne (16) du deuxième disque (14) et de sorte à entraîner un mouvement de rotation du deuxième élément racleur externe (17) selon le troisième axe de rotation (A3) pour presser la troisième portion de raclage (18) contre la surface externe (15) du deuxième disque (14).

2. Dispositif de raclage selon la revendication 1, **caractérisé en ce que** le moyen de rappel (13) consiste en un unique ressort de raideur prédéterminée.

3. Dispositif de raclage selon les revendications 1 et 2, **caractérisé en ce que** la raideur du ressort est choisie de sorte à presser la première portion de raclage (5) contre la surface externe (2) du premier disque (1), de sorte à presser la deuxième portion de raclage (10) contre la surface interne (3) du premier disque (1), de sorte à presser la troisième portion de raclage (18) contre la surface externe (15) du deuxième disque (14), et de sorte à presser la quatrième portion de raclage (22) contre la surface interne (16) du deuxième disque (14).

4. Dispositif de raclage selon l'une quelconque des revendications 1 à 3, **caractérisé en ce que** la première portion de raclage (5) est montée amovible relativement à la première portion de couplage (6) et/ou en ce que la deuxième portion de raclage (10) est montée amovible relativement à la deuxième portion de couplage (11).

5. Dispositif de raclage selon l'une quelconque des revendications 1 à 4, **caractérisé en ce que** la première portion de couplage (6) comprend une première ouverture (27) et **en ce que** la deuxième portion de couplage (11) comprend une première extrémité (28) traversant ladite première ouverture (27) et comprenant une première zone d'appui (29) agencée pour venir en appui contre une face externe (30) de la première portion de couplage (6) lors du mouvement de rotation du premier élément racleur interne (9) selon le second axe de rotation (A2).

6. Dispositif de raclage selon l'une quelconque des revendications 1 à 5, **caractérisé en ce que** la troisième portion de raclage (18) est montée amovible relativement à la troisième portion de couplage (19) et/ou en ce que la quatrième portion de raclage (22) est montée amovible relativement à la quatrième portion de couplage (21).

7. Machine agricole comprenant au moins :
- un premier disque (1),
- un châssis (7),
- au moins un dispositif de raclage,
ladite machine agricole est **caractérisée en ce que** ledit dispositif de raclage est selon l'une quelconque des revendications 1 à 6.

8. Machine agricole comprenant au moins :
- un premier disque (1) et un deuxième disque (14) disposé en regard l'un de l'autre,
- un châssis (7),
- au moins un dispositif de raclage pour le premier disque (1) et le deuxième disque (14),
ladite machine agricole est **caractérisée en ce que** ledit dispositif de raclage est selon l'une quelconque des revendications 1 à 6.

9. Machine agricole selon l'une quelconque des revendications 7 et 8, **caractérisée en ce que** la machine agricole est un semoir agricole.

## Patentansprüche

1. Abstreifvorrichtung für mindestens eine Scheibe einer landwirtschaftlichen Maschine mit mindestens:
einer erste Einheit (E1) für eine erste Scheibe (1), die eine Außenfläche (2) und eine Innenfläche (3) umfasst, wobei die erste Einheit (E1) mindestens:
- ein erstes äußeres Abstreifelement (4) mit mindestens einem ersten Abstreifabschnitt (5), der geeignet und dazu bestimmt ist, an mindestens einem Teil der Außenfläche (2) der ersten Scheibe (1) anzuliegen, und einem ersten Kupplungsabschnitt (6), der geeignet und dazu bestimmt ist, durch erste Kupplungsmittel (8) mechanisch an mindestens einen Rahmen (7) der landwirtschaftlichen Maschine gekuppelt zu werden, wobei das erste äußere Abstreifelement (4) geeignet und dazu bestimmt ist, durch die ersten Kupplungsmittel (8) um eine erste Drehachse (A1) schwenkbar in Bezug auf den Rahmen (7) montiert zu werden,
- ein erstes inneres Abstreifelement (9), das mindestens einen zweiten Abstreifabschnitt (10), der geeignet und dazu bestimmt ist, an mindestens einem Teil der Innenfläche (3) der ersten Scheibe (1) anzuliegen, und einen zweiten Kupplungsabschnitt (11) umfasst, der geeignet und dazu bestimmt ist, durch zweite Kupplungsmittel (12) an den ersten Kupplungsabschnitt (6) des ersten äußeren Abstreifelements (4) gekuppelt zu werden,
wobei das erste innere Abstreifelement (9) durch die zweiten Kupplungsmittel (12) in Bezug auf das erste äußere Abstreifelement (4) um eine zweite Drehachse (A2) schwenkbar angebracht ist, umfasst
einer zweiten Einheit (E2) für eine zweite Scheibe (14), die eine Außenfläche (15) und eine Innenfläche (16) umfasst, wobei die zweite Einheit (E2) mindestens:
- ein zweites äußeres Abstreifelement (17) mit mindestens einem dritten Abstreifabschnitt (18), der geeignet und dazu bestimmt ist, an mindestens einem Teil der Außenfläche (15) der zweiten Scheibe (14) anzuliegen, und einem dritten Kupplungsabschnitt (19), der geeignet und dazu bestimmt ist, durch dritte Kupplungsmittel (20) mechanisch an mindestens den Rahmen (7) der landwirtschaftlichen Maschine gekuppelt zu werden, wobei das erste äußere Abstreifelement (17) geeignet und dazu bestimmt ist, in Bezug auf den Rahmen (7) durch die dritten Kupplungsmittel (20) um eine dritte Drehachse (A3) schwenkbar montiert zu werden,
- ein zweites inneres Abstreifelement (21), das mindestens einen vierten Abstreifabschnitt (22), der geeignet und dazu bestimmt ist, an mindestens einem Teil der Innenfläche (16) der zweiten Scheibe (14) anzuliegen, und einen vierten Kupplungsabschnitt (23) umfasst, der geeignet und dazu bestimmt ist, durch vierte Kupplungsmittel (24) an den dritten Kupplungsabschnitt (19) des ersten äußeren Abstreifelements (17) gekuppelt zu werden, wobei das zweite innere Abstreifelement (21) in Bezug auf das zweite äußere Abstreifelement (17) durch die vierten Kupplungsmittel (24) um eine vierte Drehachse (A4) schwenkbar angebracht ist, umfasst,
einem Rücklaufmittel (13), das an einem ersten Ende (25) mit dem zweiten Kupplungsabschnitt (11) und an einem zweiten Ende (26) mit dem vierten Kupplungsabschnitt (23) verbunden ist,
wobei die Abstreifvorrichtung **dadurch gekennzeichnet ist, dass** das Rücklaufmittel (13) so ausgestaltet ist, dass es eine Drehbewegung des ersten inneren Abstreifelements (9) entlang der zweiten Drehachse (A2) bewirkt, um so den zweiten Abstreifabschnitt (10) gegen die Innenfläche (3) der ersten Scheibe (1) zu drücken, und dass es eine Drehbewegung des ersten äußeren Abstreifelements (4) entlang der ersten Drehachse (A1) bewirkt, um den ersten Abstreifabschnitt (5) gegen die Außenfläche (2) der ersten Scheibe (1) zu drücken,
das Rücklaufmittel (13) so ausgestaltet ist, dass es eine Drehbewegung des zweiten inneren Abstreifelements (21) entlang der vierten Drehachse (A4) bewirkt, um so den vierten Abstreifabschnitt (22) gegen die Innenfläche (16) der zweiten Scheibe (14) zu pressen, und dass es eine Drehbewegung des zweiten äußeren Abstreifelements (17) entlang der dritten Drehachse (A3) bewirkt, um den dritten Abstreifabschnitt (18) gegen die Außenfläche (15) der zweiten Scheibe (14) zu pressen.

2. Abstreifvorrichtung nach Anspruch 1, **dadurch gekennzeichnet, dass** das Rücklaufmittel (13) aus einer einzigen Feder mit einer vorbestimmten Steifigkeit besteht.

3. Abstreifvorrichtung nach Anspruch 1 und 2, **dadurch gekennzeichnet, dass** die Steifigkeit der Feder so gewählt ist, dass der erste Abstreifabschnitt (5) gegen die Außenfläche (2) der ersten Scheibe (1) gepresst wird, so dass der zweite Abstreifabschnitt (10) gegen die Innenfläche (3) der ersten Scheibe (1) gepresst wird, so dass der dritte Abstreifabschnitt (18) gegen die Außenfläche (15) der zweiten Scheibe (14) gepresst wird und so dass der vierte Abstreifabschnitt (22) gegen die Innenfläche (16) der zweiten Scheibe (14) gepresst wird.

4. Abstreifvorrichtung nach irgendeinem der Ansprüche 1 bis 3, **dadurch gekennzeichnet, dass** der erste Abstreifabschnitt (5) relativ zum ersten Kupplungsabschnitt (6) abnehmbar angebracht ist und/oder dadurch, dass der zweite Abstreifabschnitt (10) relativ zum zweiten Kupplungsabschnitt (11) abnehmbar angebracht ist.

5. Abstreifvorrichtung nach irgendeinem der Ansprüche 1 bis 4, **dadurch gekennzeichnet, dass** der erste Kupplungsabschnitt (6) eine erste Öffnung (27) umfasst und dadurch, dass der zweite Kupplungsabschnitt (11) ein erstes Ende (28) umfasst, das die erste Öffnung (27) durchsetzt und einen ersten Abstützungsbereich (29) umfasst, der so angeordnet ist, dass er bei der Drehbewegung des ersten inneren Abstreifelements (9) entlang der zweiten Drehachse (A2) an einer Außenfläche (30) des ersten Kupplungsabschnitts (6) anliegt.

6. Abstreifvorrichtung nach irgendeinem der Ansprüche 1 bis 5, **dadurch gekennzeichnet, dass** der dritte Abstreifabschnitt (18) relativ zum dritten Kupplungsabschnitt (19) abnehmbar angebracht ist und/oder dadurch, dass der vierte Abstreifabschnitt (22) relativ zum vierten Kupplungsabschnitt (21) abnehmbar angebracht ist.

7. Landwirtschaftliche Maschine mit mindestens:
- einer ersten Scheibe (1),
- einem Rahmen (7),
- mindestens einer Abstreifvorrichtung,
wobei die landwirtschaftliche Maschine **dadurch gekennzeichnet ist, dass** die Abstreifvorrichtung nach irgendeinem der Ansprüche 1 bis 6 ist.

8. Landwirtschaftliche Maschine mit mindestens:
- einer ersten Scheibe (1) und einer zweiten Scheibe (14), die einander gegenüberliegend angeordnet sind,
- einem Rahmen (7),
- mindestens einer Abstreifvorrichtung für die erste Scheibe (1) und die zweite Scheibe (14),
wobei die landwirtschaftliche Maschine **dadurch gekennzeichnet ist, dass** die Abstreifvorrichtung nach irgendeinem der Ansprüche 1 bis 6 ist.

9. Landwirtschaftliche Maschine nach irgendeinem der Ansprüche 7 und 8, **dadurch gekennzeichnet, dass** die landwirtschaftliche Maschine eine landwirtschaftliche Sämaschine ist.

## Claims

1. Scraper device for at least one disc of an agricultural machine, comprising at least:
a first set (E1) for a first disc (1) comprising an outer surface (2) and an inner surface(3), the first set (E1) comprising at least:
- a first outer scraper element (4) comprising at least one suitable first scraper portion (5) intended to rest against at least one part of the outer surface (2) of the first disc (1) and one suitable first coupling portion (6) intended to be mechanically coupled to at least one chassis (7) of the agricultural machine through first coupling means (8), with the suitable first outer scraper element (4) intended to be swivel-mounted with respect to the chassis (7) around a first rotation axis (A1) through the first coupling means (8);
- a first inner scraper element (9) comprising at least one suitable second scraper portion (10) intended to rest against at least one part of the inner surface (3) of the first disc (1) and one suitable second coupling portion (11) intended to be coupled to the first coupling portion (6) of the first outer scraper element (4) through second coupling means (12);
the first inner scraper element (9) being swivel-mounted with respect to the first outer scraper element (4) around a second rotation axis (A2) through the second coupling means (12);
a second set (E2) for a second disc (14) comprising an outer surface (15) and an inner surface (16), the second set (E2) comprising at least:
- a second outer scraper element (17) comprising at least one suitable third scraper portion (18) intended to rest against at least one part of the outer surface (15) of the second disc (14) and one suitable third coupling portion (19) intended to be mechanically coupled to at least the said chassis (7) of the agricultural machine through third coupling means (20), the suitable first outer scraper element (17) being intended to be swivel-mounted with respect to the chassis (7) around a third rotation axis (A3) by the third coupling means (20);
- a second inner scraper element (21) comprising at least one suitable fourth scraper portion (22) intended to rest against at least one part of the inner surface (16) of the second disc (14) and one suitable fourth coupling portion (23) intended to be coupled to the third coupling portion (19) of the first outer scraper element (17) by fourth coupling means (24);
the second inner scraper element (21) being swivel-mounted with respect to the second outer scraper element (17) around a fourth rotation axis (A4) by the fourth coupling means (24);
a resetting means (13) connected by a first end (25) to the second coupling portion (11) and by a second end (26) to the fourth coupling portion (23);
the scraper device is **characterized**
**in that** the resetting means (13) is configured to cause a rotational movement of the first inner scraper element (9) along the second rotation axis (A2), so as to press the second scraper portion (10) against the inner surface (3) of the first disc (1) and so as to cause a rotational movement of the first outer scraper element (4) along the first rotation axis (A1) to press the first scraper portion (5) against the outer surface (2) of the first disc (1);
**in that** the resetting means (13) is configured to cause a rotational movement of the second inner scraper element (21) along the fourth rotation axis (A4), so as to press the fourth scraper portion (22) against the inner surface (16) of the second disc (14) and so as to cause a rotational movement of the second outer scraper element (17) along the third rotation axis (A3) to press the third scraper portion (18) against the outer surface (15) of the second disc (14).

2. Scraper device according to claim 1, **characterized in that** the resetting means (13) consists of a single spring of predetermined stiffness.

3. Scraper device according to claims 1 and 2, **characterized in that** the stiffness of the spring is chosen so as to press the first scraper portion (5) against the outer surface (2) of the first disc (1), so as to press the second scraper portion (10) against the inner surface (3) of the first disc (1), so as to press the third scraper portion (18) against the outer surface (15) of the second disc (14), and so as to press the fourth scraper portion (22) against the inner surface (16) of the second disc (14).

4. Scraper device according to any one of claims 1 to 3, **characterized in that** the first scraper portion (5) is fitted in a removable manner relative to the first coupling portion (6) and/or **in that** the second scraper portion (10) is fitted in a removable manner relative to the second coupling portion (11).

5. Scraper device according to any one of claims 1 to 4, **characterized in that** the first coupling portion (6) comprises a first aperture (27) and the second coupling portion (11) comprises a first end (28) passing through the said first aperture (27) and comprising a first support zone (29) positioned to come to rest against an outer side (30) of the first coupling portion (6) during the rotational movement of the first inner scraper element (9) along the second rotation axis (A2).

6. Scraper device according to any one of claims 1 to 5, **characterized in that** the third scraper portion (18) is fitted in a removable manner relative to the third coupling portion (19) and/or **in that** the fourth scraper portion (22) is fitted in a removable manner relative to the fourth coupling portion (21).

7. Agricultural machine comprising at least:
- a first disc (1);
- a chassis (7);
- at least one scraper device;
the said agricultural machine is **characterized in that** the said scraper device is in accordance with any one of claims 1 to 6.

8. Agricultural machine comprising at least:
- a first disc (1) and a second disc (14) positioned opposite each other;
- a chassis (7);
- at least one scraper device for the first disc (1) and the second disc (14);
the said agricultural machine is **characterized in that** the said scraper device is in accordance with any one of claim 1 to 6.

9. Agricultural machine according to any one of claims 7 and 8, **characterized in that** the agricultural machine is an agricultural seeder.
